# EUROPÄISCHE PATENTSCHRIFT

(11) **EP 4 096 967 B1**
(45) Veröffentlichungstag und Bekanntmachung des Hinweises auf die Patenterteilung: **02.07.2025**
(21) Anmeldenummer: 21702374.6
(22) Anmeldetag: 19.01.2021
(51) Int. Cl.: B60R 13/02, B62D 25/06

(54) **FAHRZEUGDACH MIT MINDESTENS EINEM DACHELEMENT UND EINEM BEABSTANDET ZU DEM DACHELEMENT ANGEORDNETEN FORMHIMMEL SOWIE EIN VERFAHREN ZUR ERHÖHUNG DER DACHBEULSTEIFIGKEIT EINES FAHRZEUGDACHS**
VEHICLE ROOF COMPRISING AT LEAST ONE ROOF ELEMENT AND A MOULDED HEADLINER LOCATED AT A DISTANCE FROM THE ROOF ELEMENT, AND METHOD FOR INCREASING THE RESISTANCE OF THE VEHICLE ROOF TO DENTING
TOIT DE VÉHICULE COMPRENANT AU MOINS UN ÉLÉMENT DE TOIT ET UNE GARNITURE DE TOIT MOULÉE SITUÉE À UNE CERTAINE DISTANCE DE L'ÉLÉMENT DE TOIT, ET PROCÉDÉ D'AUGMENTATION DE LA RÉSISTANCE DU TOIT DE VÉHICULE AUX BOSSES

(30) Priorität: 28.01.2020 DE 102020200962
(43) Veröffentlichungstag der Anmeldung: 07.12.2022
(73) Patentinhaber: VOLKSWAGEN AKTIENGESELLSCHAFT, 38440 Wolfsburg (DE)
(72) Erfinder: WEBER, Mathis, 38118 Braunschweig (DE); RÖSSEL, Silvio, 08315 Lauter-Bernsbach (DE); WOLF, Michael, 38440 Wolfsburg (DE)
(86) Internationale Anmeldenummer: PCT/EP2021/050989
(87) Internationale Veröffentlichungsnummer: WO 2021/151715

(56) Entgegenhaltungen:
- EP-A1- 1 852 314
- DE-U1- 20 200 835
- FR-A1- 2 936 756
- JP-A- 2011 158 271

## Beschreibung

Die Erfindung betrifft ein Fahrzeugdach mit mindestens einem Dachelement und einem zumindest teilweise beabstandet zu dem Dachelement angeordneten Formhimmel sowie ein Verfahren zur Erhöhung der Dachbeulsteifigkeit. Unter einem Fahrzeug werden insbesondere Kraftfahrzeuge und bevorzugt Personenkraftfahrzeuge verstanden. Von dem Begriff sollen jedoch auch andere Fahrzeuge umfasst sein, insbesondere Luftfahrzeuge und Wasserfahrzeuge.

Im Rahmen der Produktentwicklung von Fahrzeugen, insbesondere Kraftfahrzeugen, müssen die Fahrzeuge gesetzliche und/oder von den jeweiligen Automobilherstellern festgelegte Vorgaben hinsichtlich der Dachbeulsteifigkeit erfüllen. Eine hohe Dachbeulsteifigkeit führt zu einem verbesserten Qualitätsempfinden bei den Kunden und führt auch in der Praxis zu einer höheren Belastbarkeit des Fahrzeugdachs bei Schneelasten oder Druckbelastungen, wie sie beispielsweise beim Polieren eines Fahrzeugdachs auftreten. Erwünscht ist es im Allgemeinen, dass sich das Dach in solchen praktischen Belastungsfällen plastisch nicht verformt und die elastische Verformung ohne sprunghaftes Beulen der Außenhaut erfolgt und möglichst gering ist. In der Praxis werden dazu zusätzlich zu einem oder mehreren, relativ dünnwandigen Dachblechen, welche die Außenhaut bilden, teilweise mit den Dachblechen verbundene, unterhalb dieser angeordnete Dachversteifungen und/oder Dachspriegel (Dachquerträger aus Blech, die mit Klebstoff gegenüber dem Dachblech befestigt sind) eingesetzt. Dabei ist der Einsatz von Dachspriegeln aufgrund der für die Serienfertigung nötigen Arbeitsschritte und die damit verbundene Anlagentechnik kostenintensiv.

In FR 2 936 756 A1 ist ein Fahrzeugdach offenbart, das aus einem die Außenhaut bildenden Dachblech aus Metall oder Kunststoff und einem zumindest zur Fahrzeugmitte hin beabstandet zu dem Dachblech angeordneten weiteren Innen-Dachelement gebildet ist, wobei zwischen dem Dachblech und dem Innen-Dachelement teilweise kegelförmige Elemente angeordnet sind, um Schwingungen des Dachblechs und des weiteren Dachelements zu vermeiden.

Aus EP 1 852 314 B1 ist ein Fahrzeugverkleidungselement in Form eines plattenartigen Dachhimmels bekannt, wobei auf der zur Fahrzeugkarosserie weisenden Seite der Platte kleine Distanzelemente direkt auf die Platte geschäumt sind. Diese Distanzelemente weisen eine Länge von 2 bis 5 cm und dienen in der aus dem Stand der Technik bekannten Art und Weise dazu, den Dachhimmel gegenüber der Fahrzeugkarosserie, insbesondere einem Dachblech eines Kraftfahrzeuges, zu positionieren, indem sie in einem Bereich von maximal 5 Prozent des gesamten Dachhimmels lokal den Zwischenraum zwischen Dachhimmel und Fahrzeugkarosserie füllen. Weitere technische Aufgaben werden gemäß Absatz [0005] der Beschreibung mit diesen Distanzelementen nicht erfüllt.

Aus DE 202 00 835 U1 ist ein Innenverkleidungsteil, insbesondere in Form eines Dachhimmels eines Fahrzeuges, bekannt, das mit einfachen Mitteln zur Steifigkeit der Außenhaut des Fahrzeuges beiträgt und beispielsweise dünnere Bleche für die Außenhaut verwendbar sind. Dazu sind weitere Befestigungsstellen zwischen Innenverkleidungsteil und Außenhaut durch lösbare, im Wesentlichen linienförmige und/oder flächenförmige Befestigungsmittel gebildet. Bei dem Befestigungsmittel soll es sich insbesondere um ein wiederlösbares Verklebemittel handeln, mittels welchem eine Befestigung an der Außenhaut erfolgt.

Der Erfindung liegt die Aufgabe zugrunde, ein Fahrzeugdach mit mindestens einem Dachelement und einem zumindest teilweise beabstandet zu dem Dachelement angeordneten Formhimmel sowie ein Verfahren zur Erhöhung der Dachbeulsteifigkeit zur Verfügung zu stellen, mittels welchen die Dachbeulsteifigkeit einfach und kostengünstig umsetzbar lokal erhöht werden kann.

Die Lösung der Aufgabe erfolgt erfindungsgemäß mit den Merkmalen der unabhängigen Ansprüche. Weitere praktische Ausführungsformen und Vorteile der Erfindung sind in Verbindung mit den abhängigen Ansprüchen beschrieben.

Ein erfindungsgemäßes Fahrzeugdach weist mindestens ein Dachelement und einen beabstandet zu dem Dachelement angeordneten Formhimmel auf. Dabei kann das Dachelement entweder einteilig oder mehrteilig ausgebildet sein. Insbesondere handelt es sich bei dem Dachelement und ein einstückig hergestelltes Dachblech, welches die Dachaußenhaut bildet und sich in Fahrzeugquerrichtung (y-Richtung) über einen Großteil der Fahrzeugbreite erstreckt. Im Falle einer einstückigen Ausbildung bildet das Dachblech die gesamte Außenhaut des Fahrzeugdachs. Bei dem erfindungsgemäßen Fahrzeugdach ist zur Erhöhung der Fahrzeugdach-Beulsteifigkeit zwischen dem Formhimmel und dem Dachelement mindestens ein elastisches Spann-Distanzelement druckbelastet angeordnet, wobei das Spann-Distanzelement im montierten Zustand in Fahrzeughochrichtung (z-Richtung) um ein Übermaß von 0,5 mm bis 5 mm gestaucht ist. Unter "druckbelastet angeordnet" ist zu verstehen, dass das Spann-Distanzelement vor der Montage in dem Bereich zwischen Dachelement und Formhimmel mit einem, sich in Fahrzeughochrichtung (z-Richtung) erstreckenden Übermaß Ü hergestellt ist, welches dann während der Montage elastisch gestaucht und somit druckbelastet wird. Dadurch wird das Dachelement, insbesondere ein dünnwandiges Dachblech, aktiv von der Unterseite aus gestützt. Es ergibt sich damit eine besonders vorteilhafte Verbesserung der Dachbeulsteifigkeit mittels einer Materialvorspannung. Dabei ist das Spann-Distanzelement vorzugsweise so ausgelegt, dass es eine möglichst große Vorspannung in dem Dachelement, insbesondere Dachblech, erzeugt, ohne dass sich die Kontur des Spann-Distanzelements außenseitig an dem Dachblech abzeichnet.

Wie vorstehend bereits erwähnt, ist es erwünscht, das Spann-Distanzelement so auszulegen, dass es im montierten Zustand eine möglichst große Vorspannung erzeugt, ohne sich negativ auf das Design des Dachelements, insbesondere eines dünnwandigen Dachblechs, auszuwirken. Um dies zu erreichen hat es sich, insbesondere in Verbindung mit Spann-Distanzelementen aus Polyurethan (PUR) als vorteilhaft erwiesen, wenn das Spann-Distanzelement im montierten Zustand in Fahrzeughochrichtung (z-Richtung) um ein Übermaß (Ü) von 0,5 mm bis 5 mm gestaucht ist. Dabei sind Werte zwischen 0,5 mm und 2 mm besonders bevorzugt, insbesondere wenn die Höhe des Distanzelements im montierten Zustand in den oben angegebenen Bereichen liegt, insbesondere zwischen 10 mm und 30 mm.

Spann-Distanzelemente, insbesondere solche aus PUR, werden vorzugsweise fest mit zumindest einem der Elemente Dachelement oder Formhimmel verbunden, beispielsweise durch Verschweißen mit dem Formhimmel. Dadurch kann der Formhimmel mit einem oder mehreren Spann-Distanzelementen und weiteren Distanzelementen zu einer Einheit vormontiert und die relative Lage der Distanzelemente beim späteren Montieren des Formhimmels relativ gegenüber dem Dachelement sichergestellt werden. Die Verbindung kann alternativ oder in Ergänzung auch mit einem Schmelzklebstoff und/oder einem mindestens einseitig klebenden oder beidseitig klebenden Band erfolgen, insbesondere mittels eines Bandes, das vor dem Gebrauch zunächst mit einer Schutzfolie abgedeckt ist und dann vor der Montage entfernt wird.

Spann-Distanzelemente können besonders einfach und kostengünstig hergestellt werden, wenn sie quaderförmig ausgebildet sind oder eine andere einfache Geometrie aufweisen. Wenn solche Geometrien in Bereichen verwendet werden, wo der Abstand zwischen Formhimmel und Dachelement nicht gleich groß ist, wird die Höhe des Spann-Distanzelements so ausgelegt, dass das Übermaß an jeder Stelle des Quaders innerhalb einer zuvor festgelegten Mindest- und Maximalüberdrückung liegt, beispielsweise zwischen 1 mm und 2 mm. Vorzugsweise wird dann für den Quader eine vermittelte Höhe gewählt, mittels welcher das Einhalten der Mindest- und Maximalüberdrückung sichergestellt ist.

In Verbindung mit den nachfolgend noch näher erläuterten Werkstoffen ergibt sich bei einem Übermaß (Ü) zwischen 0,5 und 2 mm eine besonders vorteilhafte Verstärkungswirkung, ohne dass es dadurch zu optischen Beeinträchtigungen kommt. Dies gilt insbesondere, wenn das in Hochrichtung vorgesehene Übermaß maximal 20 Prozent der kleinsten Höhe des Spann-Distanzelements ausmacht, bevorzugt, maximal 15 Prozent und besonders bevorzugt maximal 10 Prozent. Bei einer (kleinsten) Höhe des Spann-Distanzelements von ca. 13 mm ergibt sich damit ein Übermaß von 2,6 mm bei 20 Prozent und von 1,95 mm bei 15 Prozent.

Ein weiterer Vorteil der Verwendung von wie vorstehend erläutert ausgelegten Spann-Distanzelementen ist, dass sich bei starken Temperaturunterschieden kein Spalt zwischen Spann-Distanzelement und den beiden Elementen Dachelement und Formhimmel bildet, wenn die Vorspannung so gewählt ist, dass die Vorspannung auch bei maximalem Abstand zwischen Formhimmel und Dachelement erhalten bleibt. Eine Geräuschentwicklung, die durch einen sich bildenden Spalt zwischen Spann-Distanzelement und den beiden Elementen Dachelement und Formhimmel entstehen könnte, ist dann ausgeschlossen.

Das mindestens eine elastische Spann-Distanzelement kann zum einen - wie vorstehend erläutert - zwischen dem Formhimmel und einem Dachblech oder zum anderen auch zwischen dem Formhimmel und einer Dachversteifung angeordnet sein, wobei die Dachversteifung insbesondere ein Zwischenelement ist, welches das Dachblech unterseitig stützt.

Das mindestens eine Spann-Distanzelement ist vorzugsweise aus einem Kunststoff oder Kunstharz hergestellt, insbesondere aus einem Schaumstoff.

Dabei haben sich insbesondere Werkstoffe aus einem Polyurethan bewährt. Alternativ oder in Ergänzung und unabhängig von dem Werkstoff haben sich solche Werkstoffe für Spann-Distanzelemente erwiesen, die eine Stauchhärte zwischen 10 kPa und 30 kPa, vorzugsweise zwischen 12 kPa und 28 kPa und besonders bevorzugt zwischen 14 und 26 kPa aufweisen. Darüber hinaus haben sich Werkstoffe mit einer Rohdichte zwischen 100 und 220 kg/m³ als vorteilhaft erwiesen, insbesondere solche mit einer Rohdichte zwischen 120 und 200 kg/m³, bevorzugt solche mit einer Rohdichte zwischen 140 und 180 kg/m³ und weiter bevorzugt solche mit einer Rohdichte zwischen 150 und 170 kg/m³, d.h. 160 kg/m³ +/- 10 kg/m³.

Die Erfindung bezieht sich insbesondere auf ein Fahrzeugdach, dessen Dachelement und/oder dessen Formhimmel sich über einen Großteil der Breite des Fahrzeugdachs des entsprechenden Fahrzeuges erstrecken. In diesem Fall handelt es sich um einstückig ausgebildete Dachelemente bzw. Dachbleche, insbesondere tiefgezogene oder durch sonstige Umformung hergestellte Metallbleche (Dachelement) bzw. aus einer Art Platte, insbesondere aus einem faserigen Werkstoff hergestellte Platte (Formhimmel). Da derartige Elemente meist eine Fläche von mehr als 1 m² aufweisen, ist die Gefahr einer zu großen Elastizität des Dachelements aufgrund einer zu geringen Stützung bzw. eines zu großen Hohlraumes zwischen Dachelement und Formhimmel besonders groß. Die Erfindung ist daher besonders vorteilhaft für Fahrzeugdächer mit einer Fläche von mehr als 0,5 m², bevorzugt mehr als 0,8 m² und weiter bevorzugt mehr als 1 m².

Unter Dachblechen im Sinne der Erfindung werden insbesondere solche Dachbleche verstanden, die eine Dicke von maximal 1 mm aufweisen, bevorzugt eine Dicke von maximal 0,8 mm und weiter bevorzugt eine Dicke von maximal 0,75 mm oder sogar maximal 0,7 mm. Bevorzugte Dickenbereiche von Dachblechen für die Erfindung sind 0,3 mm bis 1 mm, insbesondere 0,3 mm bis 0,7 mm und besonders bevorzugt 0,4 mm bis 0,7 mm.

In der Praxis hat sich bei versuchsweiser Realisierung der Erfindung als Maß für die Höhe eines Spann-Distanzelements im montierten Zustand eine sich in Fahrzeughochrichtung (z-Richtung) erstreckende Höhe als vorteilhaft erwiesen, die zwischen 1 mm und 100 mm und insbesondere zwischen 5 mm und 40 mm liegt, bevorzugt zwischen 5 mm und 30 mm und besonders bevorzugt zwischen 5 mm und 20 mm.

Um eine möglichst gleichmäßige Vorspannung in dem Bereich des Spann-Distanzelements zwischen Formhimmel und Dachelement zu erzeugen und damit das Abzeichnen des Spann-Distanzelements im Bereich der Außenhaut zu vermeiden, ist es bevorzugt, wenn die zum Dachelement gerichtete Oberseitenfläche des Spann-Distanzelements komplementär zu dem Dachelement in dem Montagebereich und/oder die zum Formhimmel gerichtete Unterseitenfläche des Spann-Distanzelements komplementär zur dem Formhimmel in dem Montagebereich geformt ist. In diesem Fall entsteht über die gesamte Fläche des Spann-Distanzelements beim Zusammenstauchen um das Übermaß in etwa die gleiche Druckspannung.

Die Erfindung betrifft auch ein Verfahren zur Erhöhung der Dachbeulsteifigkeit eines Fahrzeugdachs mit einem Dachelement und einem Formhimmel, wobei das Verfahren folgende Verfahrensschritte aufweist, die in der angegebenen Reihenfolge und vorzugsweise an einem Fahrzeug durchgeführt wird, das sich bei einem Fahrzeughersteller in der Entwicklung befindet, d.h. dessen Konstruktion noch in den für die Verfahrensschritte relevanten Aspekten anpassbar ist, durchgeführt werden, vorzugsweise in einem sehr frühen Stadium der Fahrzeugentwicklung, insbesondere mit einem der ersten physisch verfügbaren Prototyp-Fahrzeug:
a) Belasten des Fahrzeugdachs zur Untersuchung auf Schwachstellen, indem eine definierte Prüfkraft oder ein definierter Prüfdruck im Bereich mindestens eines Messpunkts des Fahrzeugdachs aufgebracht wird,
   Erläuterung: Bei den Schwachstellen kann es sich entweder um Elastizitätsstellen handeln, an denen sich das Dach über einen bestimmten, sich in Fahrzeughochrichtung erstreckenden maximalen Verformweg hinaus elastisch verformen lässt, und/oder es kann sich um sogenannte Springbeulen handeln, d.h. um Stellen, an denen sich bei Aufbringen einer bestimmten Kraft bzw. eines bestimmten Drucks plastische Verformungen in dem Fahrzeugdach bilden. Derartige Springbeulen sind im Kraft-Weg-Diagramm daran zu erkennen, dass der Kraftverlauf bei zunehmendem Weg einen absinkenden Verlauf aufweist bzw. dass im Kraft-Weg-Diagramm ein Wendepunkt erkennbar ist. Die Belastung erfolgt dabei vorzugsweise mit einer definierte Prüfkraft und mit einem definierte Prüfkörper, beispielsweise mit einem Prüfkörper, der eine vorgegebene Form aufweist, insbesondere einen zylindrischen Kopf, der aus einem vorgegebenen Werkstoff besteht, insbesondere Aluminium, und eine vorgegebene Druckfläche aufweist, insbesondere einen Durchmesser von 70 mm, d.h. eine Druckfläche von etwa 3.850 mm². Die Belastung mit dem Prüfkörper erfolgt dabei vorzugsweise normal zur Fläche, und es ist weiter bevorzugt, wenn der Prüfkörper gelenkig gelagert ist, so dass er einer etwaigen Schwenkbewegung der Prüffläche folgen kann. Als Unterlage für den Prüfkörper wird insbesondere eine 2 mm starke Gummiplatte mit einer Härte von 50 Shore A verwendet. Dabei ist die Gummiplatte auf der dem Fahrzeugdach zugewandten Seite des Prüfkörpers angeordnet und tritt damit in direkten Kontakt mit dem Fahrzeugdach, insbesondere einem Dachblech. Durch die Gummiplatte soll vermieden werden, dass die Oberfläche des Fahrzeugdachs, insbesondere eine Lackoberfläche, nicht durch Kratzer oder andere Spuren beschädigt wird. Über den Prüfkörper und die daran befestigte Gummiplatte wird das Fahrzeugdach mit einer vorgegebenen Prüfkraft beaufschlagt insbesondere mit einer Prüfkraft von 100 N.
b) Erstellung eines Kraft-Weg-Diagramms während des Belastens
   Erläuterung: Insbesondere wird ausgehend von einer Anfangsbelastung (diese kann auch null sein) bis zu einer definierten Höchstkraft bzw. einem definierten Höchstdruck zunehmend belastet, und das Kraft-Weg-Diagramm wird aus den aufgezeichneten Werten erstellt, d.h. es wird eine entsprechende Messkurve aufgezeichnet. Die Aufzeichnung des Kraft-Weg-Diagramms erfolgt vorzugsweise mittels einer funktional an den Prüfkörper angeschlossenen Kraft-Weg-Messdose, welche eine bestimmte Anzahl von Messpunkten digital aufnimmt und daraus die Messkurve interpoliert.
c) Auswertung des Kraft-Weg-Diagramms auf Schwachstellen in Form von Springbeulen (Knackfrosch-Effekt) und/oder ein zu großer nicht tolerierbarer elastischer Verformungsweg bei der Höchstkraft bzw. dem Höchstdruck oder einer geringeren Kraft als der Höchstkraft bzw. eines geringeren Drucks als des Höchstdrucks,
   Als nicht tolerierbar können insbesondere Wendepunkt in dem Kraft-Weg-Diagramm mit einer Steigung < 0 angesehen werden, wohingegen Wendepunkt mit einer Steigung von ungefähr 0 und Kurvenverläuft mit einer Steigung, die stets > 0 ist als tolerierbar angesehen werden können. Eine maximal bleibende Verformung für das Fahrzeugdach kann festgelegt werden, insbesondere auf einen Wert von <= 0,1 mm. Ebenfalls als nicht tolerierbar können sichtbare Oberflächen
d) sofern eine Schwachstelle ermittelt wird, Einbringen mindestens eines Spann-Distanzelements zwischen Formhimmel und Dachelement an der ermittelten Schwachstelle, wobei das Spann-Distanzelement in Fahrzeughochrichtung (z-Richtung) um ein Übermaß von 0,5 bis 5 mm gestaucht wird,
   Erläuterung: Dazu wird vorzugsweise ein Spann-Distanzelement in einer Standardgröße mit möglichst kleinen Abmaßen als erstes Spann-Distanzelement verwendet. Dieses wir dann gemäß dem nachfolgenden Schritt sukzessive vergrößert, bis die gewünschte Wirkung eintritt.
e) erneutes Überprüfen der Dachbeulsteifigkeit mit dem ersten Distanzelement oder mit dem vergrößerten Spann-Distanzelement und, sofern die Dachbeulsteifigkeit dann immer noch nicht zufriedenstellend ist, Vergrößerung des zuletzt überprüften Spann-Distanzelements (insbesondere derart, dass sich die zum Dachelement gerichtete Oberseitenfläche und/oder die zum Formhimmel gerichtete Unterseitenfläche vergrößert) sowie anschließende Wiederholung der beiden vorangehenden Schritte c) und d) bis das Ergebnis zufriedenstellend ist.

Das Verfahren hat den Vorteil, dass es auf relativ einfache und kostengünstige Art und Weise ermöglicht, Schwachstellen in Form von Springbeulen oder zu großer Elastizität des Dachelements bzw. Dachblechs zu erkennen und mittels konstruktiver, kurzfristig durchführbarer Maßnahmen zu beheben.

In einer praktischen Ausführungsform des erfindungsgemäßen Verfahrens werden an einem Spann-Distanzelement mehrere Messpunkte jeweils außermittig dort festgelegt, wo zuvor eine Schwachstelle ermittelt wurde. Es wird dann der Messpunkt mit der qualitativ größten Schwachstelle ermittelt, um das Spann-Distanzelement nur im Bereich dieses Messpunkts zu vergrößern. Wenn mehrere Messpunkte ermittelt wurden, kann in Richtung aller Messpunkte eine Vergrößerung vorgenommen werden. Alternativ kann eine Vergrößerung sukzessive immer in Richtung des Messpunktes erfolgen, an welchem eine Schwachstelle noch am qualitativ stärksten ausgebildet ist.

Auf die in Verbindung mit dem Fahrzeugdach beschriebenen Vorteile wird hiermit noch einmal verwiesen. Diese werden auch mit dem Verfahren erreicht, soweit das Verfahren zu einem erfindungsgemäßen Fahrzeugdach führt.

Weitere praktische Ausführungsformen der Erfindung sind nachfolgend im Zusammenhang mit den Zeichnungen beschrieben. Es zeigen:
- Fig. 1: ein Kraftfahrzeug in einer Ansicht von oben mit einer Vielzahl von auf dem Fahrzeugdach angeordneten Messpunkten MP1 bis MP11,
- Fig. 2: ein Kraft-Weg-Diagramm mit allen den in Fig. 1 eingetragenen Messpunkten zugeordneten Kraft-Weg-Kurven, die vor der erfindungsgemäßen Modifizierung ermittelt wurden,
- Fig. 3: einen modifizierten Formhimmel eines Fahrzeugdachs mit einer Vielzahl von Standard-Distanzelementen und mit zwei Spann-Distanzelementen,
- Fig. 4: ein Kraft-Weg-Diagramm mit den in Fig. 1 eingetragenen Messpunkten MP4, MP6, MP8 und MP9 zugeordneten Kraft-Weg-Kurven, die nach der erfindungsgemäßen Modifizierung ermittelt wurden,
- Fig. 5: eine schematische Darstellung einer ersten erfindungsgemäßen Dachanordnung mit einem Spann-Distanzelement, das zwischen einem Formhimmel und einem weiter außenseitig angeordneten Dachelement in Form eines Dachblechs angeordnet ist, und
- Fig. 6: eine schematische Darstellung einer zweiten erfindungsgemäßen Dachanordnung mit einem Spann-Distanzelement, das zwischen einem Formhimmel und einem weiter außenseitig angeordneten Dachelement in Form einer Dachversteifung angeordnet ist.

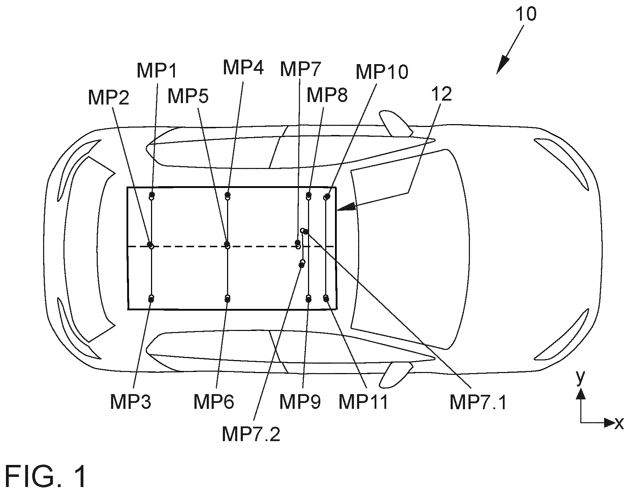

Figur 1 zeigt ein Kraftfahrzeug 10 mit einem Fahrzeugdach 12. Über das Fahrzeugdach 12 verteilt sind eine Vielzahl von Messpunkten angeordnet, hier insgesamt 13 Messpunkte, die mit MP1, MP2, MP3, MP4, MP5, MP6, MP7, MP7.1, MP7.2, MP8, MP9, MP10 und MP11 gekennzeichnet sind.

Die Messpunkte sind ausgewählte Stellen auf dem Fahrzeugdach 12, an denen exemplarisch die Dachbeulsteifigkeit des Daches 12 gemessen wird. Dazu wird das Fahrzeugdach 12 mit einer kontinuierlich von 0 N auf 100 N ansteigenden Kraft F in Fahrzeughochrichtung von oben nach unten belastet, und währenddessen wird der Weg x in Millimeter (mm) gemessen, den sich die Vorrichtung, mittels welcher die Kraft in das Fahrzeugdach 12 eingeleitet wird, in Richtung Fahrzeuginnenraum bewegt.

In den Figuren 1, 3, 5 und 6 sind Koordinatensysteme ergänzt, in welchen die Fahrzeuglängsrichtung mit der x-Richtung, die Fahrzeugquerrichtung mit der y-Richtung und die Fahrzeughochrichtung mit der z-Richtung gekennzeichnet sind.

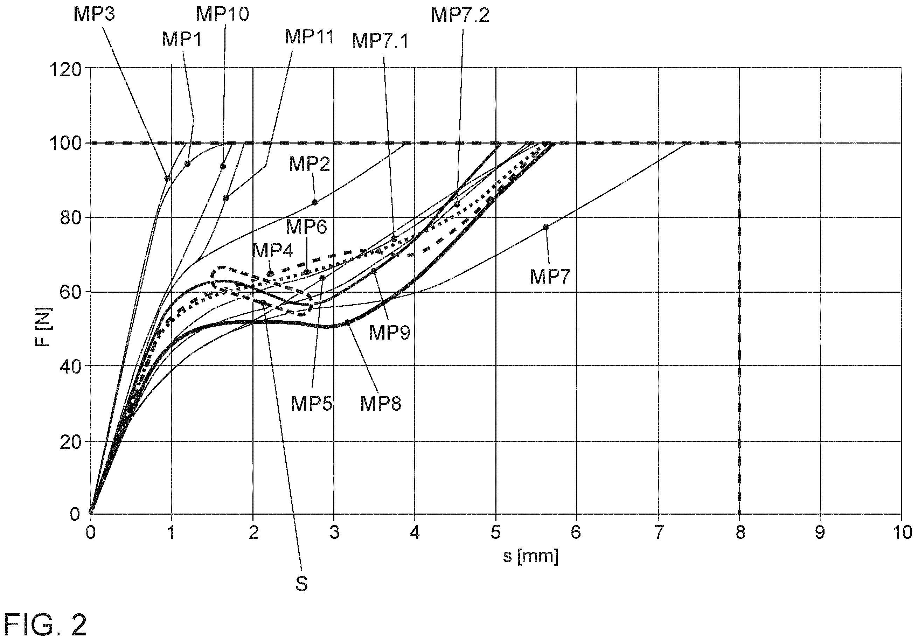

Figur 2 zeigt die Kraft-Weg-Diagramme für alle Messpunkte. An die Dachbeulsteifigkeit werden im vorliegenden Fall insbesondere die folgenden Anforderungen gestellt:
A) Bei einer Belastung von 100 N soll der Weg, den sich das Dach 12 in Richtung Fahrzeuginnenraum bewegt, maximal 8 mm betragen. Diese Anforderung ist für alle Messpunkte erfüllt.
B) In dem gesamten Kraft-Weg-Verlauf soll es nicht zu einem Kraftabfall kommen, d.h. zu einer Verringerung der Kraft bei sich vergrößerndem Weg, weil dieser Effekt zu einer sogenannten Springbeule führt. Dies ist unerwünscht.

Im vorliegenden Fall kommt es bei den Messpunkten MP4, MP6, MP8 und MP9 zu einem Kraftabfall. Exemplarisch ist in Fig. 2 der Wegbereich zwischen ca. 1,5 mm und 2,7 mm gestrichelt umkreist und mit S gekennzeichnet, weil in diesem Wegbereich ein unerwünschter Kraftabfall auftritt.

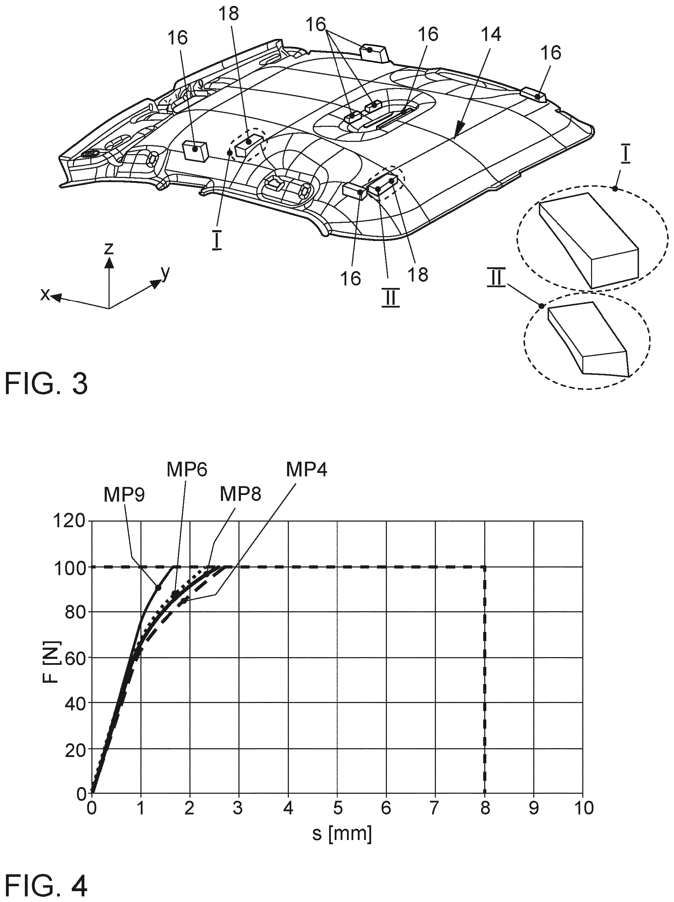

Um die Anforderung B auch für die Messpunkte MP4, MP6, MP8 und MP9 zu erfüllen, werden - wie in Fig. 3 gezeigt ist - auf einem Formhimmel 14, welcher auf der dem Fahrzeuginnenraum zugewandten Seite des Dachs 12 angeordnet ist, zusätzlich zu einer Vielzahl von Standard-Distanzelementen 16 auch ein zwei Spann-Distanzelemente 18 angeordnet.

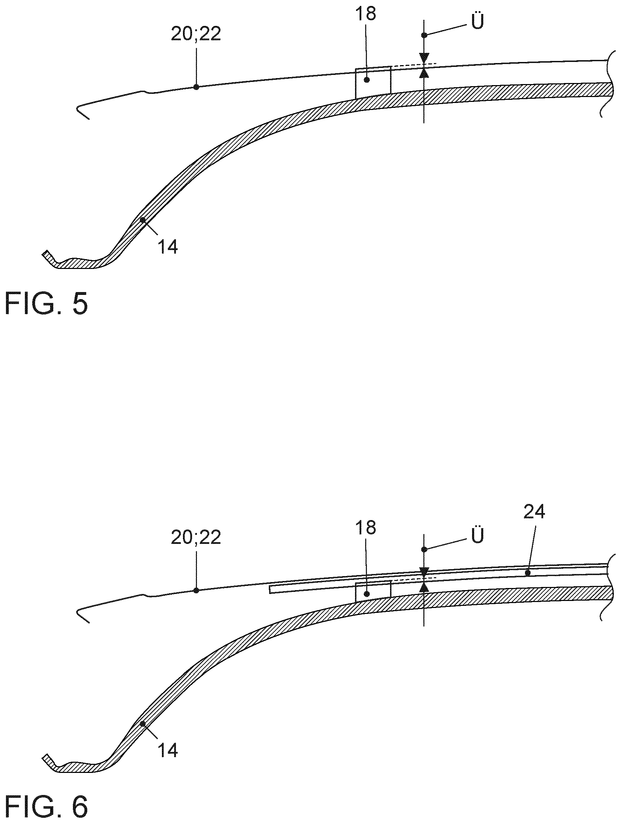

In den Figuren 5 und 6 sind zwei verschiedene Varianten für die Anordnung von Spann-Distanzelementen 18 gezeigt.

Bei der Variante gemäß Fig. 5 ist das Spann-Distanzelement 18 zwischen dem Formhimmel 14 und einem Dachelement 20, hier ein Dachblech 22, angeordnet.

Bei der Variante gemäß Fig. 6 ist das Spann-Distanzelement 18 zwischen dem Formhimmel 14 und einer Dachversteifung 24 angeordnet, die sich von der Unterseite des Dachelements 20, hier wiederum in Form des Dachblechs 22, erstreckt.

Das Spann-Distanzelement 18 weist im nicht montierten Zustand ein Übermaß Ü auf, das in den Figuren 5 und 6 deshalb erkennbar und eingetragen ist, weil das Spann-Distanzelement 18 in diesen Figuren im durch das Dachelement 20 in Form des Dachblechs 22 (Fig. 5) bzw. im durch die Dachversteifung 24 nicht druckbelasteten Zustand dargestellt ist.

Die Erfindung kann im Rahmen der Ansprüche und unter Berücksichtigung der Kenntnisse des zuständigen Fachmanns variiert werden.

### Bezugszeichenliste

- 10: Kraftfahrzeug
- 12: Fahrzeugdach
- 14: Formhimmel
- 16: Standard-Distanzelement
- 18: Spann-Distanzelement
- 20: Dachelement
- 22: Dachblech
- 24: Dachversteifung

- Ü: Übermaß
- MP1: Messpunkt
- MP2: Messpunkt
- MP3: Messpunkt
- MP4: Messpunkt
- MP5: Messpunkt
- MP6: Messpunkt
- MP7: Messpunkt
- MP7.1: Messpunkt
- MP7.2: Messpunkt
- MP8: Messpunkt
- MP9: Messpunkt
- MP10: Messpunkt
- MP11: Messpunkt

## Patentansprüche

1. Fahrzeugdach mit mindestens einem Dachelement (20) und einem beabstandet zu dem Dachelement (20) angeordneten Formhimmel (14),
**dadurch gekennzeichnet,**
**dass** zur Erhöhung der Fahrzeugdach-Beulsteifigkeit zwischen dem Formhimmel (14) und dem Dachelement (20) mindestens ein elastisches Spann-Distanzelement (18) druckbelastet angeordnet ist, wobei das Spann-Distanzelement (18) im montierten Zustand in Fahrzeughochrichtung (z-Richtung) um ein Übermaß (Ü) von 0,5 mm bis 5 mm gestaucht ist.

2. Fahrzeugdach nach dem vorstehenden Anspruch, **dadurch gekennzeichnet, dass** das mindestens eine elastische Spann-Distanzelement (18) zwischen dem Formhimmel (14) und einem Dachblech (22) oder zwischen dem Formhimmel (14) und einer Dachversteifung (24) angeordnet ist.

3. Fahrzeugdach nach einem der vorstehenden Ansprüche, **dadurch gekennzeichnet, dass** das mindestens eine Spann-Distanzelement (18) aus einem Kunststoff oder Kunstharz hergestellt ist.

4. Fahrzeugdach nach dem vorstehenden Anspruch, **dadurch gekennzeichnet, dass** das mindestens eine Spann-Distanzelement (18) aus einem Polyurethan hergestellt ist und/oder der Werkstoff des Spann-Distanzelements (18) eine Stauchhärte zwischen 10 kPa und 30 kPa und/oder eine Rohdichte zwischen 100 und 220 kg/m³ aufweist.

5. Fahrzeugdach nach einem der vorstehenden Ansprüche, **dadurch gekennzeichnet, dass** sich das Dachelement (20) und/oder der Formhimmel (14) über einen Großteil der Breite des Fahrzeugdachs (12) erstrecken.

6. Fahrzeugdach nach einem der vorstehenden Ansprüche, **dadurch gekennzeichnet, dass** mindestens ein Spann-Distanzelement (18) im montierten Zustand eine sich in Fahrzeughochrichtung (z-Richtung) erstreckende Höhe aufweist, die zwischen 1 mm und 100 mm liegt.

7. Fahrzeugdach nach einem der vorstehenden Ansprüche, **dadurch gekennzeichnet, dass** die zum Dachelement (20) gerichtete Oberseitenfläche des Spann-Distanzelements (18) komplementär zu dem Dachelement (20) in dem Montagebereich und/oder die zum Formhimmel (14) gerichtete Unterseitenfläche des Spann-Distanzelements (18) komplementär zur dem Formhimmel (14) in dem Montagebereich geformt ist.

8. Verfahren zur Erhöhung der Dachbeulsteifigkeit eines Fahrzeugdachs (12) mit einem Dachelement (20) und einem Formhimmel (14), **gekennzeichnet durch** folgende Verfahrensschritte:
a) Belasten des Fahrzeugdachs (12) zur Untersuchung auf Schwachstellen, indem eine definierte Prüfkraft oder ein definierter Prüfdruck im Bereich mindestens eines Messpunkts (MP1-MP11) des Fahrzeugdachs (12) aufgebracht wird,
b) Erstellung eines Kraft-Weg-Diagramms während des Belastens,
c) Auswertung des Kraft-Weg-Diagramms auf Schwachstellen in Form von Springbeulen und/oder eine nicht tolerierbare elastische Verformung,
d) sofern eine Schwachstelle ermittelt wird, Einbringen mindestens eines Spann-Distanzelements (18) zwischen Formhimmel (14) und Dachelement (20) an der ermittelten Schwachstelle, wobei das Spann-Distanzelement (18) in Fahrzeughochrichtung (z-Richtung) um ein Übermaß (Ü) von 0,5 mm bis 5 mm gestaucht wird,
e) erneutes Überprüfen der Dachbeulsteifigkeit mit dem ersten Distanzelement (16) oder mit dem vergrößerten Spann-Distanzelement (18) und, sofern die Dachbeulsteifigkeit dann immer noch nicht zufriedenstellend ist, Vergrößerung des zuletzt überprüften Spann-Distanzelements (18) sowie anschließende Wiederholung der beiden vorangehenden Schritte c) und d) bis das Ergebnis zufriedenstellend ist.

9. Verfahren nach dem vorstehenden Anspruch, **dadurch gekennzeichnet, dass** an einem Spann-Distanzelement (18) mehrere Messpunkte (MP1-MP11) jeweils außermittig definiert werden und eine etwaige Vergrößerung an der Seite des Spann-Distanzelements (18) vorgenommen wird, wo zuvor eine Schwachstelle ermittelt wurde.

## Claims

1. Vehicle roof comprising at least one roof element (20) and a shaped headliner (14) arranged at a distance from the roof element (20),
**characterized in that,**
in order to increase the vehicle roof buckling resistance, at least one resilient tensioning spacer element (18) is arranged under pressure between the shaped headliner (14) and the roof element (20), wherein, in the mounted state, the tensioning spacer element (18) is compressed in the vehicle vertical direction (z-direction) by an excess (Ü) of 0.5 mm to 5 mm.

2. Vehicle roof according to the preceding claim, **characterized in that** the at least one resilient tensioning spacer element (18) is arranged between the shaped headliner (14) and a roof panel (22) or between the shaped headliner (14) and a roof stiffening element (24).

3. Vehicle roof according to either of the preceding claims,
**characterized in that** the at least one tensioning spacer element (18) is made of a plastics material or synthetic resin.

4. Vehicle roof according to the preceding claim, **characterized in that** the at least one tensioning spacer element (18) is made of a polyurethane and/or the material of the tensioning spacer element (18) has a compressive strength between 10 kPa and 30 kPa and/or has a bulk density between 100 and 220 kg/m ³.

5. Vehicle roof according to any of the preceding claims,
**characterized in that** the roof element (20) and/or the shaped headliner (14) extend over a large part of the width of the vehicle roof (12).

6. Vehicle roof according to any of the preceding claims,
**characterized in that** at least one tensioning spacer element (18), in the mounted state, has a height extending in the vehicle vertical direction (z-direction) of between 1 mm and 100 mm.

7. Vehicle roof according to any of the preceding claims,
**characterized in that** the upper surface of the tensioning spacer element (18), which faces the roof element (20), has a shape which is complementary to the roof element (20) in the assembly region, and/or the lower surface of the tensioning spacer element (18), which faces the shaped headliner (14), has a shape which is complementary to the shaped headliner (14) in the assembly region.

8. Method for increasing the roof buckling resistance of a vehicle roof (12) comprising a roof element (20) and a shaped headliner (14), **characterized by** the following method steps:
a) loading the vehicle roof (12) to examine for weak points, by applying a defined test force or a defined test pressure in the region of at least one measuring point (MP1-MP11) of the vehicle roof (12),
b) creating a force-displacement diagram during the loading process,
c) evaluating the force-displacement diagram for weak points in the form of oil canning and/or intolerable elastic deformation,
d) if a weak point is identified, inserting at least one tensioning spacer element (18) between the headliner (14) and the roof element (20) at the identified weak point, wherein the tensioning spacer element (18) is compressed in the vehicle vertical direction (z-direction) by an excess (Ü) of 0.5 mm to 5 mm,
e) checking the roof buckling resistance again with the first tensioning spacer element (16) in place or with the enlarged tensioning spacer element (18) in place and, if the roof buckling resistance is still not satisfactory, enlarging the last checked tensioning spacer element (18) and then repeating the two previous steps c) and d) until the result is satisfactory.

9. Method according to the preceding claim, **characterized in that** a plurality of measuring points (MP1-MP11) are each defined eccentrically on a spacer element (18), and any enlargement is carried out on the side of the clamping spacer element (18) where a weak point was previously identified.

## Revendications

1. Toit de véhicule comportant au moins un élément de toit (20) et une garniture de toit moulée (14) agencée à distance de l'élément de toit (20),
**caractérisé en ce**
**que,** pour augmenter la résistance du toit de véhicule aux bosses, au moins un élément d'espacement de tension (18) élastique est agencé de manière à être soumis à une pression, entre la garniture de toit moulée (14) et l'élément de toit (20), dans lequel l'élément d'espacement de tension (18) est refoulé, à l'état monté, dans la direction verticale du véhicule (direction z), d'une surmesure (Ü) de 0,5 mm à 5 mm.

2. Toit de véhicule selon la revendication précédente, **caractérisé en ce que** l'au moins un élément d'espacement de tension (18) élastique est agencé entre la garniture de toit moulée (14) et une tôle de toit (22) ou entre la garniture de toit moulée (14) et un raidisseur de toit (24).

3. Toit de véhicule selon l'une des revendications précédentes, **caractérisé en ce que** l'au moins un élément d'espacement de tension (18) est fabriqué à partir d'une matière plastique ou d'une résine synthétique.

4. Toit de véhicule selon la revendication précédente, **caractérisé en ce que** l'au moins un élément d'espacement de tension (18) est fabriqué en un polyuréthane et/ou le matériau de l'élément d'espacement de tension (18) présente une dureté à l'écrasement comprise entre 10 kPa et 30 kPa et/ou une densité brute comprise entre 100 et 220 kg/m³.

5. Toit de véhicule selon l'une des revendications précédentes, **caractérisé en ce que** l'élément de toit (20) et/ou la garniture de toit moulée (14) s'étendent sur une grande partie de la largeur du toit de véhicule (12).

6. Toit de véhicule selon l'une des revendications précédentes, **caractérisé en ce qu'**au moins un élément d'espacement de tension (18) présente, à l'état monté, une hauteur s'étendant dans la direction verticale du véhicule (direction z), qui est comprise entre 1 mm et 100 mm.

7. Toit de véhicule selon l'une des revendications précédentes, **caractérisé en ce que** la surface latérale supérieure de l'élément d'espacement de tension (18) orientée vers l'élément de toit (20) est formée de manière complémentaire à l'élément de toit (20) dans la zone de montage et/ou la surface latérale inférieure de l'élément d'espacement de tension (18) orientée vers la garniture de toit moulée (14) est formée de manière complémentaire à la garniture de toit moulée (14) dans la zone de montage.

8. Procédé d'augmentation de la résistance du toit aux bosses d'un toit de véhicule (12) comportant un élément de toit (20) et une garniture de toit moulée (14), **caractérisé par** les étapes de procédé suivantes :
a) chargement du toit de véhicule (12) pour examiner les points faibles, en appliquant une force d'essai définie ou une pression d'essai définie dans la zone d'au moins un point de mesure (MP1-MP11) du toit du véhicule (12),
b) création d'un diagramme force/course pendant le chargement,
c) évaluation du diagramme force/course pour détecter des points faibles sous forme de bosses de saut et/ou une déformation élastique non tolérable,
d) dans la mesure où un point faible est déterminé, mise en place d'au moins un élément d'espacement de tension (18) entre la garniture de toit moulée (14) et l'élément de toit (20) au niveau du point faible déterminé, dans lequel l'élément d'espacement de tension (18) est comprimé dans la direction verticale du véhicule (direction z) d'une surmesure (Ü) de 0,5 mm à 5 mm,
e) nouvelle vérification de la résistance du toit aux bosses avec le premier élément d'espacement (16) ou avec l'élément d'espacement de tension (18) agrandi et, si la résistance du toit aux bosses n'est toujours pas satisfaisante, agrandissement du dernier élément d'espacement de tension (18) vérifié, puis répétition des deux étapes c) et d) précédentes jusqu'à ce que le résultat soit satisfaisant.

9. Procédé selon la revendication précédente, **caractérisé en ce que** plusieurs points de mesure (MP1-MP11) sont définis sur un élément d'espacement de tension (18), respectivement de manière excentrée, et un agrandissement éventuel est effectué sur le côté de l'élément d'espacement de tension (18) où un point faible a été préalablement déterminé.
